# EUROPÄISCHE PATENTANMELDUNG

(11) **EP 1 698 819 A1**
(43) Veröffentlichungstag der Anmeldung: **06.09.2006**
(21) Anmeldenummer: 06003331.3
(22) Anmeldetag: 18.02.2006
(51) Int. Cl.: F16L 21/03

(54) **Steckverbindung mit Formdichtung und Entlüftung**

(30) Priorität: 03.03.2005 DE 102005009688
(71) Anmelder: Henn GmbH & Co.KG, 6850 Dornbirn (AT)
(72) Erfinder: Hartmann, Harald, 6850 Dornbirn (AT)
(74) Vertreter: Riebling, Peter

(57) **Zusammenfassung**

Die Erfindung betrifft eine Steckverbindung mit Formdichtring (6) zur Herstellung von Flüssigkeits- oder gasdichten Verbindungen, wobei die Steckverbindung einen Stutzen und einen Stecker aufweist, welche axial ineinander steckbar sind und der Formdichtring (6) als eine in einer umlaufenden Nut des Steckers angeordneten Lippendichtung ausgebildet ist.

Der Erfindung liegt die Aufgabe zugrunde, eine Steckverbindung mit Formdichtring der eingangs genannten Art derart weiterzubilden, dass ein Pumpeffekt vermieden wird, um somit ein Vakuum am Nutgrund bei pulsierenden Belastungen der Steckverbindung zu vermeiden.

## Beschreibung

Gegenstand der Erfindung ist eine Steckverbindung mit Formdichtring und Entlüftung nach dem Oberbegriff des Patentanspruches 1.

Mit Bezug auf die Funktion einer Steckverbindung und einem damit verwendeten Formdichtring wird auf die ältere Patentanmeldung des gleichen Anmelders DE 10 2004 019 800.4 verwiesen.

Als Stand der Technik wird auch auf die DE 24 13 750 C2 verwiesen, in der ebenfalls ein Formdichtring als zweiflügliger Dichtring in Figur 5 beschrieben ist.

Ein solcher Formdichtring wird bevorzugt für Steckkupplungen verwendet, weil geringe Einsteckkräfte vorhanden sind. Bei Steckverbindungen besteht allerdings das Problem, dass die Nutausformung im Stecker relativ ungenau ist und überdies nur eine geringe Nuttiefe vorhanden ist, weil der gesamte Stecker als Ziehteil ausgebildet ist und daher nur eine geringe Nuttiefe aufweist. Anders wäre dies, wenn die Nut im spanabhebenden Verfahren hergestellt werden würde.

Aufgrund der Verwendung eines als Blechteil ausgebildeten Steckers ergibt sich der Nachteil, dass relativ große Toleranzen im Bereich der Dichtungsverbindung zwischen Stecker und Stutzen sind, da - wie ausgeführt - der Stecker bevorzugt aus einem Blechteil besteht und der Stutzen aus verschiedenartigen Werkstoffen bestehen kann, wie z. B. Kunststoff, Druckguss und andere Metallmaterialien. Darüber hinaus kann er als Drehteil oder als Ziehteil ausgebildet sein.

Wegen der damit verbundenen geringen axialen Führungslänge beim Zusammenführen der Steckverbindung ergibt sich demzufolge auch ein großes Winkelspiel.

Aus den genannten Gründen hat sich die Verwendung einer Lippendichtung nach dem Gegenstand der oben genannten, älteren Patentanmeldung in großem Umfang bewehrt.

Nun hat sich herausgestellt, dass bei pulsierenden Belastungen der Steckverbindung, wobei Pulsstöße im Bereich von - 200 mbar bis + 4 bar Überdruck vorkommen können, eine außerordentlich hohe Belastung für die Dichtverbindung auftreten kann. Neben diesen Druckstößen erfolgt auch eine überlagerte Relativbewegung zwischen dem Stutzen und dem Stecker, was hohe Anforderungen an die Lippendichtung stellt.

Bei der Konstruktion nach der DE 24 13 750 wird eine Lippendichtung nur in Verbindung mit einer sehr präzis gefertigten Nut funktionieren, weil sich die beiden Schenkel der Lippendichtung praktisch formschlüssig an die Flanken der Nut anschließen und hierdurch keinerlei Freiräume gebildet werden. Bei entsprechender, pulsierender Belastung kommt es deshalb auch nicht zu einem Abhebeeffekt oder einem Verdrängungseffekt des statischen Schenkels der Lippendichtung, wie es bei der oben genannten Steckverbindung der Fall sein kann.

Bei einer Steckverbindung mit einem Lippendichtring nach dem Gegenstand der älteren Patentanmeldung kommt es bei pulsierenden Belastungen zu einem sogenannten Pumpeffekt. Dabei verschiebt sich die Lippendichtung mit ihrem Basisschenkel an die hintere Nutflanke und erreicht damit eine Dichtwirkung zwischen dem Basisschenkel der c-förmig profilierten Lippendichtung und der Nutflanke.

Gleichzeitig bläht sich aber auch die dynamische Dichtlippe auf, dadurch entsteht ein Zug auf den dynamischen Schenkel und den Basisschenkel und es entsteht am Nutgrund ein Vakuum, weil sich der Basisschenkel zusammen mit dem statischen Schenkel aus der Nut abhebt.

Das Medium wird nun von der Druckseite in den so entstandenen Hohlraum angesaugt, weil der statische Schenkel nachgibt und der Rücken und der Basisschenkel an der ringförmig umlaufenden Dichtflanke der Nut zu stark abdichtet.

Sobald der Druck aus dem Druckraum entfernt wird, wird die Lippendichtung in Richtung gegen die Druckbelastung nach vorne geschoben, dadurch lässt die Dichtwirkung an den Nutflanken nach und das Medium wird aus dem einen Unterdruck führenden Hohlraum in den Außenraum abgegeben.

Damit ist der vorerwähnte Pumpeffekt beschrieben, der mit dem nachfolgend beschriebenen erfinderischen Merkmalen verhindert werden soll.

Der Erfindung liegt deshalb die Aufgabe zugrunde, eine Steckverbindung mit Formdichtring der eingangs genannten Art so weiterzubilden, dass der vorher beschriebene Pumpeffekt vermieden wird.

Zur Lösung der gestellten Aufgabe ist die Erfindung durch die technische Lehre des Anspruches 1 gekennzeichnet.

Wesentliches Merkmal der Erfindung ist, dass ein sich bei pulsierenden Belastungen der Steckverbindung am Grund der Nut bildender Pumpraum entlüftbar ist.

In einer bevorzugten Ausgestaltung der Erfindung ist es vorgesehen, dass die luftschlüssige Verbindung durch mehrere am Umfang der Lippendichtung verteilt angeordnete Entlüftungsrillen erfolgt.

In einer anderen Ausgestaltung ist es vorgesehen, dass statt der die Dichtwirkung des Basisschenkels unterbrechenden Entlüftungsrillen auf dem Basisschenkel mehrere gleichmäßig am Umfang verteilt angeordnete und über den Außenumfang des Basisschenkels vorstehenden Noppen angeordnet sind, welche zwischen sich die besagten luftschlüssigen Verbindungen zwischen dem Pumpraum im Bereich der Nut des Steckers und dem Außenraum ergeben.

Statt der Anordnung von durchmesservergrößernden Noppen, die über den Basisschenkel hervorstehen, können auch die äquivalenten Maßnahmen in kinematischer Umkehrung im Bereich der Nutflanke am Stecker vorgenommen werden.

Hierbei wird es in einer ersten Ausgestaltung vorgesehen, dass im Stecker umlaufende und einen gleichmäßigen Abstand voneinander aufweisende Durchbrüche im Bereich der Nutflanke vorhanden sind, welche ebenfalls den Pumpraum der Steckernut mit dem Außenraum verbinden.

Statt der gesagten Durchbrüche können auch im Bereich der umlaufenden Nutflanke Kerben vorgesehen werden, um so ebenfalls die luftschlüssige Verbindung zwischen dem im Bereich der Nut des Steckers vorhandenen Pumpraum und dem Außenraum zu ergeben.

Die Erfindung hat den Vorteil, dass als Lippendichtung ein c-förmig profilierter Ring verwendet wird, der eine leichte, dünne Lippenausführung aufweist, wodurch geringe Steckkräfte entstehen. Beispielsweise kann es vorgesehen sein, dass die Dicke des statischen Schenkels dreimal so groß ist wie die des dynamischen Schenkels.

In einer Weiterbildung der Erfindung ist es vorgesehen, dass im Bereich des statischen Schenkels ein nach außen gerichteter und gegen den Nutgrund anliegender Dichtbuckel am statischen Schenkel vorgesehen ist. Damit wird eine definierte Dichtkante gebildet.

Eine weitere Ausgestaltung der Erfindung sieht vor, dass der Stecker im Bereich des sich bildenden Pumpraumes eine Be-/Entlüftungsbohrung durch den Körper des Steckers hindurch aufweist, welche eine kontinuierliche Be-/Entlüftung des entstehenden Pumpraumes durchführt.

Auch ist vorteilhaft, wenn ein relativ dünner Basiskörper verwendet wird, der etwa doppelt so stark wie die Stärke des dynamischen Schenkels ist.

Kern der Erfindung ist also, dass Rippen, Kerben, Noppen und ähnliche Geometrien vorhanden sind, die am Basisschenkel der c-förmig profilierten Lippendichtung eine luftschlüssige Verbindung zwischen dem Pumpraum und dem Außenraum bilden, wobei der Pumpraum sich am Außenumfang des statischen Schenkels in Richtung auf die Innenwandung der umlaufenden Nut im Stecker bildet.

Mit der gegebenen technischen Lehre ergibt sich wegen der Verwendung einer c-förmig profilierten Lippendichtung der Vorteil geringer Einsteckkräfte.

Es können somit auch unpräzise Nutausformungen bei geringer Nuttiefe beherrscht werden, weil aufgrund der Vermeidung des Pumpeffektes keine besonderen Anforderungen mehr an die Nutgeometrie bestehen.

Damit sind die Herstellungskosten für einen solchen Stecker besonders niedrig. Er kann aus einem billigen Blechmaterial gezogen werden.

Es können somit auch große Toleranzen zwischen dem Stecker und dem Stutzen überbrückt werden.

Ebenso ist ein großes Winkelspiel zwischen den Achsen des Steckteiles und des Stutzens möglich, was im Bereich von +- 5° liegen kann.

Auch pulsierende Belastungen des Mediums im Bereich zwischen -200 mbar bis +4 bar Überdruck können abgedichtet und gut beherrscht werden.

Wegen der leichten Ausführung der Dichtung erfolgt auch ein geringer Materialeinsatz.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur A:: eine Steckverbindung nach der älteren Patentanmeldung im drucklosen Zustand;
- Figur B:: die Steckverbindung nach Figur A unter Druck mit Darstellung des Pumpeffektes;
- Figur 1:: die perspektivische Darstellung der erfindungsgemäßen Ausführung einer Lippendichtung;
- Figur 1A:: eine gegenüber Figur 1 abgewandelte Ausführungsform;
- Figur 2:: die Darstellung der erfindungsgemäßen Lösung einer Steckverbindung in zwei verschiedenen Ausführungsformen ohne Einwirkung von Innendruck;
- Figur 3:: die Ausführung nach Figur 3 in wiederum zwei verschiedenen Ausführungsformen bei Einwirkung von Innendruck.

Anhand der Figuren A und B soll zunächst die Pumpwirkung erklärt werden, wie sie bei einer Lippendichtung nach der älteren Patentanmeldung zustande kommen kann.

Die Figur A zeigt eine Steckverbindung nach der älteren Patentanmeldung, bestehend aus einem Stecker 1, der bevorzugt als Blechbiegeteil ausgebildet ist. Der Stecker 1 bildet einen umlaufenden Innenraum 2, der von einem Schlauch ausgefüllt ist, der hier nicht dargestellt ist.

Der nicht vorhandene Schlauch dichtet einen Innenraum mit einem Druckmedium 3 ab, welches in Pfeilrichtung 12 auf die Steckverbindung einwirkt.

Das Gegenstück zu dem Stecker 1 wird durch einen Stutzen 20 gebildet und im Zwischenraum zwischen dem Stecker 1 und dem Stutzen 20 ist die neuartige Lippendichtung 6 angeordnet.

Zur Abdichtung des Steckers 1 an dem Stutzen 20 ist im Blechmaterial des Steckers eine umlaufende Nut 5 ausgeformt, in welche die genannte c-förmige Lippendichtung 6 eingelassen ist.

Die Lippendichtung 6 besteht aus einem statischen Schenkel 8, der sich mit einem unteren und am vorderen Ende angeordneten Dichtbuckel 22 am Nutgrund abdichtend abstützt. Der statische Schenkel 8 geht über einen Basisschenkel 17 in einen dynamischen Schenkel 7 über, der sich ebenfalls mit seinem vorderen freien Teil an dem Innenumfang des Stutzens 20 abdichtend anlegt.

Das Druckmedium 3 wirkt somit in Pfeilrichtung 12 auf den Ringspalt 4 und neigt dazu, die Lippendichtung "aufzublasen".

Im Übergang zwischen Figur A und Figur B sind diese Verhältnisse dargestellt.

Hierbei ist erkennbar, dass aufgrund des wirkenden Überdrucks dieser in den Ringraum 13 vor der Lippendichtung 6 eintritt und damit auch den Zwischenraum 9 zwischen den Schenkeln 7, 8 belastet.

Hierdurch wird der Zwischenraum 9 - aufgrund der gegebenen Druckerhöhung - vergrößert, wodurch sich der dynamische Schenkel 7 an dem Innenumfang des Stutzens 20 anlegt.

Gleichzeitig hebt sich der statische Schenkel 8 von dem Nutgrund der Nut 5 ab und bewegt sich nach oben. Dadurch wird ein Pumpraum 15 freigegeben, weil sich auf der gegenüberliegenden Seite der dynamische Schenkel 7 in den Freiraum 14 verdrängt.

Der Pumpraum 15 ist jedoch in unerwünschter Weise gegenüber der Atmosphäre abgedichtet, weil der Basisschenkel 17 noch an der Nutflanke 11 der Nut 5 abdichtend anliegt und somit keine Entlastung für den Pumpraum 15 bildet.

Obwohl sich die Lippendichtung 6 mit ihrem Basisschenkel 17 in Pfeilrichtung 16 nach oben angehoben hat, bleibt also der Pumpraum 15 in sich geschlossen und aufgrund dieser Bewegung in Pfeilrichtung 16 wird somit Unterdruck im Pumpraum 15 erzeugt.

Nachdem die Abdichtung an der Nutflanke 11 größer ist als vergleichsweise im Bereich des vorderen Dichtbuckels 22, wird somit das Druckmedium in Pfeilrichtung 12 unter Überwindung des Dichtbuckels 22 in den unterdruckführenden Pumpraum 15 nachgesaugt und wird dort bevorratet.

Sobald der Druck des Druckmediums 3 wegfällt, verformt sich die Lippendichtung 6 in Gegenrichtung zur eingezeichneten Pfeilrichtung 16, außerdem kommt es zu einer axialen Bewegung zwischen Stecker und Stutzen, wenn der Druck des Druckmediums 3 entfällt, wodurch sich der Zustand nach Figur A wieder ergibt.

Das im Pumpraum 15 bevorratete Druckmedium wird jedoch dann aus diesem Pumpraum 15 über die Nutflanke 11 in Richtung auf den Außenraum 10 entfernt, wodurch es zu einer unerwünschten Leckage kommt.

Damit ist der Pumpeffekt beschrieben, der dafür sorgt, dass in geringen Portionen (tröpfchenweise) das Druckmedium über den unerwünschten Pumpeneffekt in den Außenraum 10 abgegeben wird.

Selbstverständlich gelten die gleichen Verhältnisse auch dann, wenn das Druckmedium kein flüssiges Medium, sondern ein gasförmiges Medium ist.

Hier setzt die Erfindung ein.

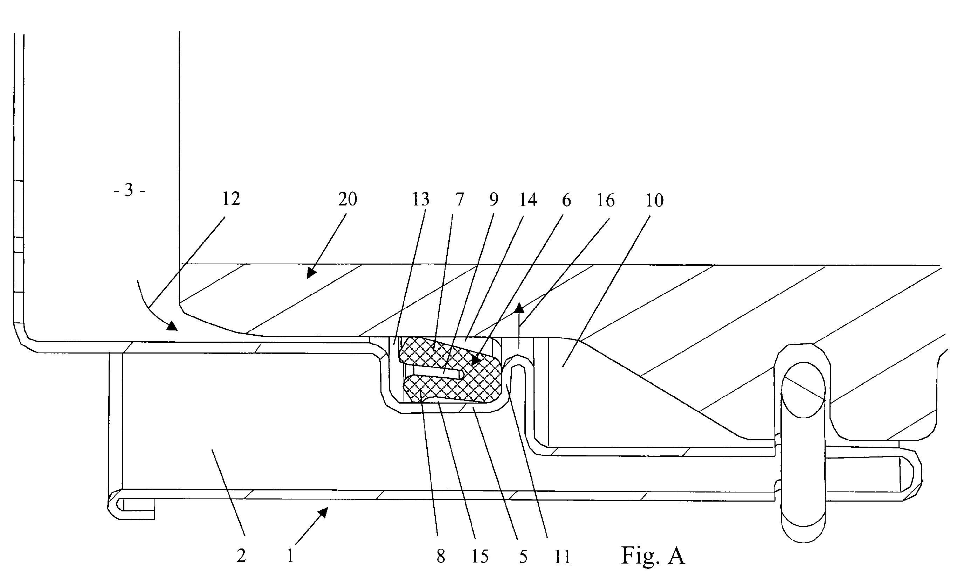

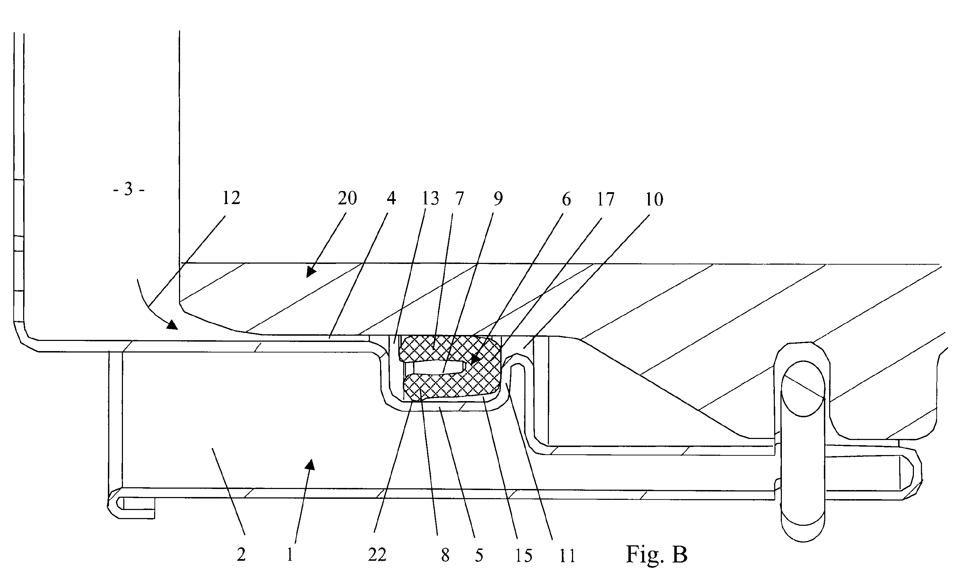

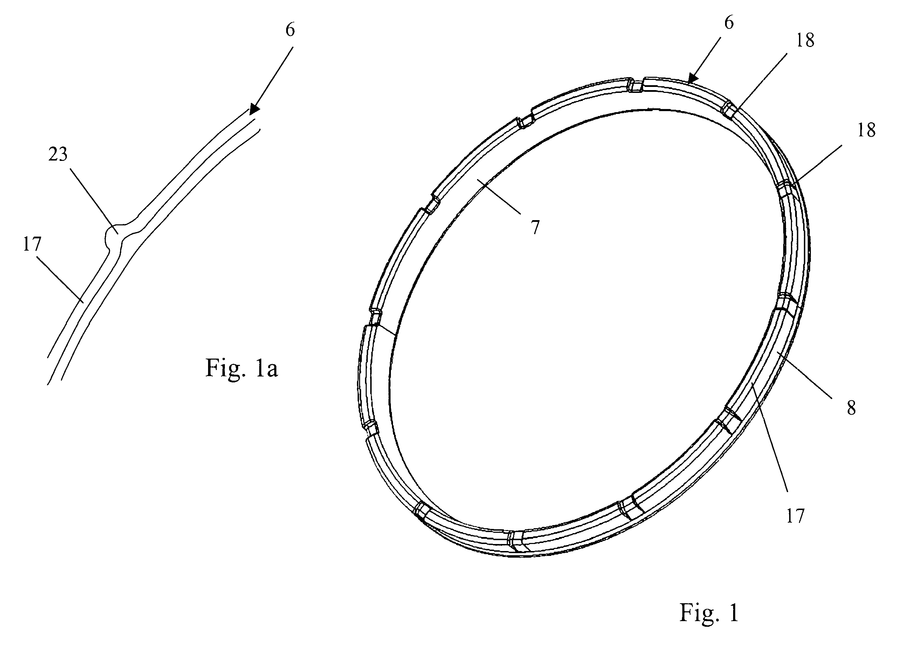

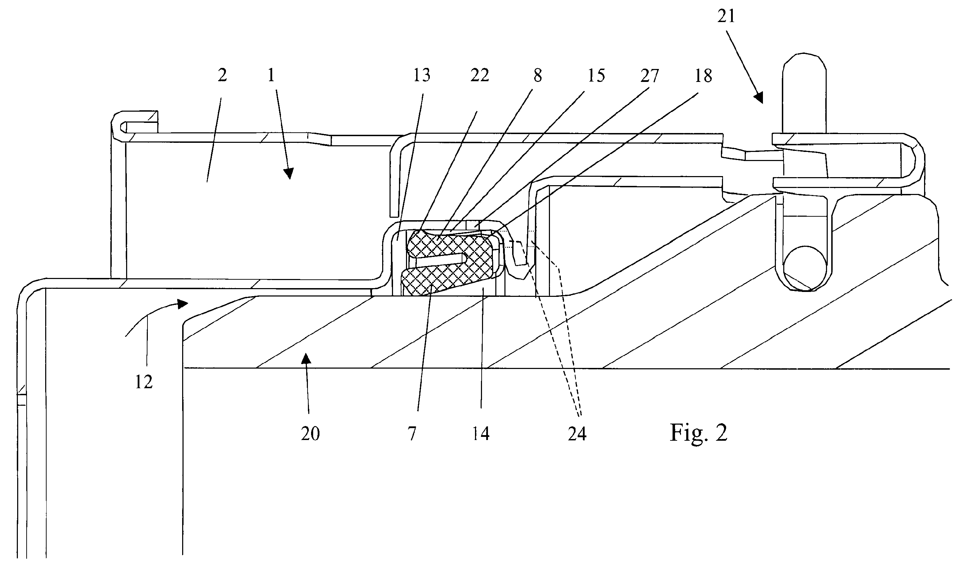

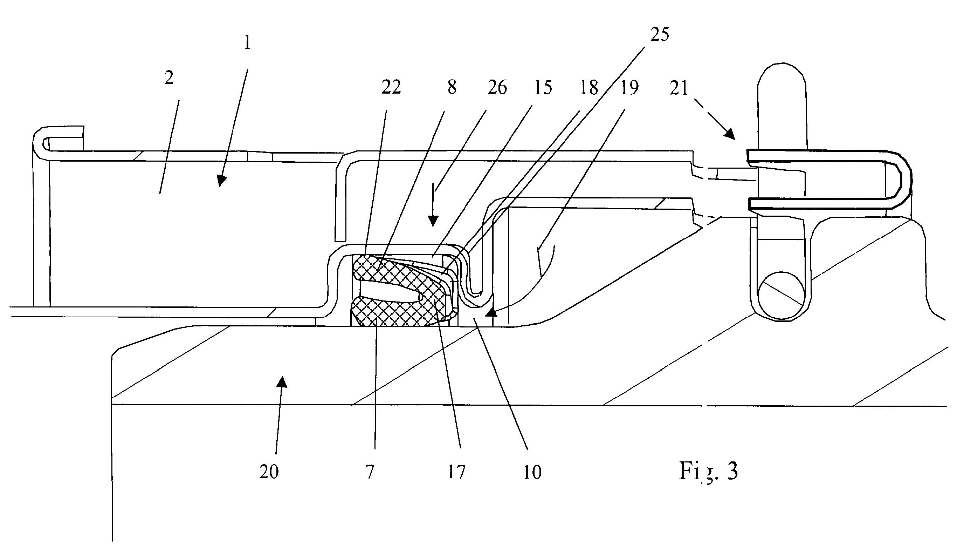

In den Zeichnungsbeispielen der Figuren 2 und 3 ist die genaue Ausführung der Steckverbindung dargestellt, wie sie anhand der Figuren A und B erläutert wurde. Es gelten daher auch die gleichen Erläuterungen und gleichen Merkmale für die Ausführung nach der Erfindung gemäß den Figuren 1 bis 3.

Wesentliches Merkmal der Erfindung ist nun, dass gemäß Figur 1 die Lippendichtung 6 mindestens im Bereich des Basisschenkels gleichmäßig am Umfang verteilte, in radiale Richtung weisende, Entlüftungsrillen 18 aufweist, welche den Dichtungsverbund des Basisschenkels 17 im Bereich der Nutflanke 11 der Steckernut 5 unterbricht.

Diese Funktion ist anhand der Figuren 2 und 3 näher erläutert.

Aus zeichnerischen Gründen wurde jetzt die gemäß der Darstellung in Figur A und B gespiegelte Lage dargestellt, wobei der Pumpraum 15 sich nun in den Zeichnungen nach Figur 2 und 3 oben befindet. Es gelten jedoch die gleichen konstruktiven Verhältnisse.

Aus dem Vergleich zwischen Figur 2 und 3 ist nun erkennbar, dass bei der Vergrößerung des Pumpraumes 15 beim Übergang zwischen Figur 2 und Figur 3 nun ein Bevorraten des Druckmediums im Pumpraum nicht mehr möglich ist, weil die im Basisschenkel 17 der Lippendichtung 6 angeordneten Lüftungsrillen 18 bei einer dauernden luftschlüssigen Verbindung des Pumpraumes 15 in Richtung auf den Außenraum 10 ermöglichen.

Der Pumpraum 15 ist also stets offen in Richtung auf den Außenraum 10.

Wenn sich nun aufgrund der Einwirkung des Druckmediums 3 die Lippendichtung 6 in Pfeilrichtung 26 nach unten bewegt, um den Pumpraum 15 zu öffnen, erfolgt eine Druckentlastung vom Medium aus dem Außenraum in Pfeilrichtung 19.

Ergänzend wird nur darauf hingewiesen, dass die lösbare Verbindung zwischen Stecker 1 und Stutzen 20 durch eine Rastvorrichtung 21 gebildet wird, die Gegenstand vieler Patentanmeldungen des gleichen Anmelders ist. Auf die zum Stand der Technik gehörenden Beschreibungen dieser Rastvorrichtung wird verwiesen. Die Offenbarung soll vollinhaltlich von der vorliegenden Erfindung umfasst sein.

Als alternative Ausführungsform wird in Figur 1A gezeigt, dass statt der Entlüftungsrillen 18 auch sogenannte Noppen 23 vorgesehen werden können, die über die lichte Weite des Basisschenkels 17 hervorstehen und die demzufolge eine kinematische Umkehrung der vorher erwähnten Entlüftungsrillen 18 darstellen.

Als alternatives Merkmal können die Entlüftungsmaßnahmen auch nicht oder nicht nur im Bereich der Lippendichtung 6 vorgesehen werden, sondern sie können auch im Bereich der Nutflanke 11 vorgesehen werden.

Hierzu zeigt die Figur 2 in gestrichelten Linien eine erste Ausführungsform, die darstellt, dass im Bereich der Nutflanke 11 Durchbrüche 24 in axialer Richtung vorgesehen werden können, die sich auch durch die benachbarte Flanke des Steckers hindurch erstrecken, um so ebenfalls eine luftschlüssige Verbindung mit dem Außenraum 10 zu ermöglichen.

Es wird nochmals wiederholt, dass sowohl die druckentlüftenden Maßnahmen an der Lippendichtung 6 allein oder in Kombination mit den konstruktiven Umgestaltungen im Bereich der Nutflanke 11 vorgenommen werden können.

Die Figur 3 zeigt eine weitere Ausführungsform der konstruktiven Umgestaltung der Nutflanke 11, die ebenfalls in Kombination mit der Entlüftung der Lippendichtung oder auch in Alleinstellung die erfinderische technische Lehre löst.

Dort ist dargestellt, dass in gleichmäßigen Abständen am Umfang verteilt im Bereich der Nutflanke 11 Kerben 25 angeordnet sind, die demzufolge dadurch auch eine luftschlüssige Verbindung zwischen dem Pumpraum 15 und dem Außenraum 10 ergeben.

Wichtig ist also, dass die Entlüftungsmaßnahmen in weiten Grenzen veränderbar sind, um zu erreichen, dass keine Dichtwirkung zwischen dem Basisschenkel 17 und der Nutflanke 11 entsteht, um so den Pumpraum 15 luftschlüssig mit dem Außenraum 10 zu verbinden.

Es können demzufolge auch an der Nutflanke 11 Löcher, Kerben oder Rippen angeordnet werden.

Der Dichtring ist aus einem elastomeren Material, wie z. B. einem Gummi, Kautschuk, einem Polymer-Kunststoff und dergleichen mehr.

Bei einem Nenndurchmesser der Steckverbindung von 55 mm hat der Dichtring lediglich eine axiale Länge von etwa 4,5 mm, eine Höhe von 4 bis 4,5 mm im unverbauten Zustand.

Die Dicke des statischen Schenkels beträgt hierbei maximal 2 mm, während die Dicke des dynamischen Schenkels etwa 1 bis 2 mm beträgt.

Hieraus ergibt sich der leichte und raumsparende Aufbau der Lippendichtung, wodurch sehr geringe Steckkräfte ermöglicht werden.

In einer Weiterbildung der Erfindung kann es auch vorgesehen werden, dass zur Entlüftung des Pumpraumes 15 im Bereich des Nutengrundes der Nut 5 Durchbrüche 27 gleichmäßig verteilt am Umfang angeordnet sind.

Eine zusätzliche Ausgestaltung der Erfindung sieht vor, dass der Stecker 1 im Bereich des sich bildenden Pumpraumes 15 eine Be-/Entlüftungsbohrung 28 aufweist, welche eine kontinuierliche Be-/Entlüftung des entstehenden Pumpraumes 15 durchführt.

### Zeichnungslegende

- 1: Stecker
- 2: Innenraum (Schlauch)
- 3: Druckmedium (Innenraum)
- 4: Ringspalt
- 5: Nut
- 6: Lippendichtung
- 7: Schenkel (dynamisch)
- 8: Schenkel (statisch)
- 9: Zwischenraum
- 10: Außenraum
- 11: Nutflanke
- 12: Pfeilrichtung
- 13: Ringraum
- 14: Freiraum
- 15: Pumpraum
- 16: Pfeilrichtung
- 17: Basisschenkel
- 18: Entlüftungsrille
- 19: Pfeilrichtung
- 20: Stutzen
- 21: Rastvorrichtung
- 22: Dichtbuckel
- 23: Noppe
- 24: Durchbruch (Nutflanke)
- 25: Kerbe (Nutflanke)
- 26: Pfeilrichtung
- 27: Durchbruch
- 28: Be-/Entlüftungsbohrung

## Patentansprüche

1. Steckverbindung mit Formdichtring zur Herstellung von Flüssigkeits- oder gasdichten Verbindungen, wobei die Steckverbindung einen Stutzen und einen Stecker (1) aufweist, welche axial ineinander steckbar sind und der Formdichtring als eine in einer umlaufenden Nut (5) des Steckers (1) angeordneten Lippendichtung (6) ausgebildet ist, **dadurch gekennzeichnet, dass** ein sich bei pulsierenden Belastungen der Steckverbindung am Grund der Nut (5) bildender Pumpraum (15) be-/entlüftbar ausgebildet ist.

2. Steckverbindung mit Formdichtring nach Anspruch 1, **dadurch gekennzeichnet, dass** eine Be-/Entlüftung des Pumpraums mittels einer luftschlüssigen Verbindung zwischen dem Pumpraum (15) und einem Außenraum (10) ausgebildet ist.

3. Steckverbindung mit Formdichtring nach den Ansprüchen 1 und 2, **dadurch gekennzeichnet, dass** die luftschlüssige Verbindung durch mehrere am Umfang der Lippendichtung (6) verteilt angeordnete Entlüftungsrillen (18) ausgebildet ist.

4. Steckverbindung mit Formdichtring nach den Ansprüchen 1 bis 3, **dadurch gekennzeichnet, dass** statt der die Dichtwirkung des Basisschenkels (17) unterbrechenden Entlüftungsrillen (18) auf dem Basisschenkel (17) mehrere gleichmäßig am Umfang verteilt angeordnete und über den Außenumfang des Basisschenkels (17) vorstehende Noppen (23) angeordnet sind und sich zwischen den Noppen (23) luftschlüssige Verbindungen zwischen dem Pumpraum (15) im Bereich der Nut (5) des Steckers (1) und dem Außenraum (10) ausbilden.

5. Steckverbindung mit Formdichtring nach den Ansprüchen 1 bis 4, **dadurch gekennzeichnet, dass** die Nut (5) im Stecker (1) eine Nutflanke (11) aufweist, in deren Bereich äquivalente Maßnahmen in kinematischer Umkehrung zu den unterbrechenden Entlüftungsrillen (18) auf dem Basisschenkel (17) angeordnet sind.

6. Steckverbindung mit Formdichtring nach den Ansprüchen 1 bis 5, **dadurch gekennzeichnet, dass** eine erste äquivalente Maßnahme im Stecker (1) umlaufende und im gleichmäßigen Abstand voneinander aufweisende Durchbrüche im Bereich der Nutflanke (11) aufweist, welche den Pumpraum (15) der Nut (5) im Stecker (1) mit dem Außenraum (10) verbinden.

7. Steckverbindung mit Formdichtring nach den Ansprüchen 1 bis 6, **dadurch gekennzeichnet, dass** eine zweite äquivalente Maßnahme im Stecker (1) umlaufende und im gleichmäßigen Abstand voneinander aufweisende Kerben (25) im Bereich der Nutflanke (11) aufweist, welche den Pumpraum (15) der Nut (5) im Stecker (1) mit dem Außenraum (10) verbinden.

8. Steckverbindung mit Formdichtring nach den Ansprüchen 1 bis 7, **dadurch gekennzeichnet, dass** der Stecker (1) im Bereich des sich bildenden Pumpraumes (15) eine Be-/Entlüftungsbohrung (28) aufweist.

9. Steckverbindung mit Formdichtring nach den Ansprüchen 1 bis 8, **dadurch gekennzeichnet, dass** die Lippendichtung (6) als ein c-förmig profilierter Ring mit relativ gering auftretenden Steckkräften ausgebildet ist, welcher einen dynamischen Schenkel (7), einen statischen Schenkel (8) und einen Basisschenkel (17) aufweist.

10. Steckverbindung mit Formdichtring nach den Ansprüchen 1 bis 9, **dadurch gekennzeichnet, dass** im Bereich des statischen Schenkels (8) ein nach außen gerichteter und gegen den Grund der Nut (5) anliegender Dichtbuckel (22) am statischen Schenkel (8) angeordnet ist, welcher eine definierte Dichtkante bildet.

11. Steckverbindung mit Formdichtring nach den Ansprüchen 1 bis 10, **dadurch gekennzeichnet, dass** die Lippendichtung (6) einen relativ dünnen Basiskörper aufweist, welcher vorzugsweise die doppelte Stärke des dynamischen Schenkels (7) aufweist.

12. Steckverbindung mit Formdichtring nach den Ansprüchen 1 bis 11, **dadurch gekennzeichnet, dass** die Rippen (22), Kerben (25), Noppen (23) und ähnlichen Geometrien am Basisschenkel (17) der c-förmig profilierten Lippendichtung (6) eine luftschlüssige Verbindung zwischen dem Pumpraum (15) und dem Außenraum (10) bilden, wobei der Pumpraum (15) sich am Außenumfang des statischen Schenkels (8) in Richtung auf die Innenwandung der umlaufenden Nut (5) im Stecker (1) ausbildet.

13. Steckverbindung mit Formdichtring nach den Ansprüchen 1 bis 12, **dadurch gekennzeichnet, dass** zur Vermeidung des Pumpeffektes die Nut (5) eine relativ unpräzise Ausformung bei geringer Nuttiefe aufweisen kann und keine besondere Anforderung an die Nutgeometrie gestellt ist.

14. Steckverbindung mit Formdichtring nach den Ansprüchen 1 bis 13, **dadurch gekennzeichnet, dass** die Toleranz zwischen Stecker (1) und Stutzen relativ groß ist, wodurch die Herstellkosten im Besonderen relativ niedrig sind.

15. Steckverbindung mit Formdichtring nach den Ansprüchen 1 bis 14, **dadurch gekennzeichnet, dass** das zwischen den Achsen des Steckers (1) und dem Stutzen liegende Winkelspiel relativ groß ist.

16. Steckverbindung mit Formdichtring nach den Ansprüchen 1 bis 15, **dadurch gekennzeichnet, dass** ein relativ großer Belastungsbereich durch pulsierende Medien vorteilhaft abgedichtet wird und die Lippendichtung (8) einen relativ geringen Materialeinsatz aufweist.
